(19) Europäisches Patentamt
European Patent Office
Office européen des brevets

(11) **EP 2 840 365 B1**

(12) **EUROPEAN PATENT SPECIFICATION**

(45) Date of publication and mention
of the grant of the patent:
**09.09.2020 Bulletin 2020/37**

(21) Application number: **13779025.9**

(22) Date of filing: **17.04.2013**

(51) Int Cl.:
*G01F 15/06* (2006.01)      *F23N 5/26* (2006.01)
*G01F 25/00* (2006.01)      *G01F 1/66* (2006.01)
*G01F 15/00* (2006.01)

(86) International application number:
**PCT/JP2013/002589**

(87) International publication number:
**WO 2013/157257 (24.10.2013 Gazette 2013/43)**

(54) **METHOD FOR FLOW RATE MEASUREMENT**

VERFAHREN ZUR DURCHFLUSSMESSUNG

MÉTHODE DE MESURE DE DÉBIT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **17.04.2012 JP 2012093625**

(43) Date of publication of application:
**25.02.2015 Bulletin 2015/09**

(73) Proprietor: **Panasonic Intellectual Property
Management Co., Ltd.
Osaka-shi, Osaka 540-6207 (JP)**

(72) Inventors:
• **YOKOHATA, Mitsuo**
  **Osaka-shi, Osaka 540-6207 (JP)**
• **NAWA, Motoyuki**
  **Osaka-shi, Osaka 540-6207 (JP)**

(74) Representative: **SSM Sandmair
Patentanwälte Rechtsanwalt
Partnerschaft mbB
Joseph-Wild-Straße 20
81829 München (DE)**

(56) References cited:
**EP-A1- 1 881 304      JP-A- H07 151 578
JP-A- 2006 200 802    JP-A- 2011 191 122**

## Description

## Technical Field

The present invention relates to a method of using a flow meter device which determines a gas instrument in use based on a gas flow.

## Background Art

Conventionally, in general, there is known a technique for identifying a gas instrument based on a flow value unique to the gas instrument (see e.g. Patent Literature 1).

A gas meter relating to this technique includes a flow measuring means which is connected to a home gas supply pipe and measures a gas flow value, and an instrument determiner means which compares the gas flow value measured by the flow measuring means to the flow patterns of the gas instruments for use which are stored in a registration storage means to determine a gas instrument in use (gas instrument which is now using a gas).

## Citation List

## Patent Literature

Patent Literature 1: Japanese Laid-Open Patent Application Publication NO. 2006-200802

EP 1 881 304 A1 discloses a flow rate measurement device connected to a household gas supply pipe including: a flow rate measuring instrument for measuring flow rate in predetermined time intervals; a computing unit for obtaining a differential value of flow rate values output from flow rate measuring instrument; an appliance information storage; and an appliance determining unit for comparing the differential value calculated by computing unit with a start determination value registered in appliance information storage and determining use of an appliance connected downstream of flow rate measuring instrument.

JP 2011 191122 A discloses a gas flow rate measuring instrument including: a flow rate measuring section for measuring a flow rate of gas for a gas appliance; a receiving section for receiving, from the outside, gas appliance information including a flow rate change pattern and the quality information of a gas appliance to be introduced newly; an appliance registration section for registering the flow rate change pattern included in the gas appliance information; and an appliance distinguishing section for distinguishing the gas appliance to be used by comparing the flow rate of the gas measured in the flow rate measuring section with the flow-rate change pattern registered in the appliance registration section.

## Summary of Invention

## Technical Problem

However, in a case where different gas instruments which are equal in gas flow value, exist, among the above stated conventional gas instruments, it is difficult to determine the gas instrument in use based on the flow pattern.

The present invention is directed to solving the above described problem associated with the prior art, and an object of the present invention is to provide a flow meter device which is capable of determining whether or not a fluid instrument in use is a particular fluid instrument, even when there exist fluid instruments which use the fluid and are equal in flow value.

## Solution to Problem

The scope of the invention is defined in the appended claims. Any reference to "embodiment(s)", "example(s)" or "aspect(s) of the invention" in this description not falling under the scope of the claims should be interpreted as illustrative example(s) for understanding the invention.

## Advantageous Effects of Invention

A flow meter device of the present invention is able to determine whether or not a fluid instrument in use is a particular fluid instrument, even when there exist fluid instruments which are equal in flow value.

## Brief Description of Drawings

Fig. 1 is a view showing a heating power adjustment knob of a stove burner connected to a flow meter device according to an embodiment of the present invention.
Fig. 2 is a block diagram showing the exemplary configuration of the flow meter device of Fig. 1.
Fig. 3 is a flowchart showing the exemplary operation of the flow meter device of Fig. 1.
Fig. 4 is a time chart of the flow meter device of Fig. 1.
Fig. 5 is a flowchart showing the exemplary operation of a flow meter device according to a modified example of the embodiment of the present invention.

## Description of Embodiments

According to a first aspect of the present invention, a flow meter device comprises: a flow measuring section for measuring a flow of a fluid in a fluid passage through which the fluid is supplied to a fluid instrument in use; and a measurement data processing section which calculates a slope of a change in a flow difference per unit time which change occurs with time, at a time point when a sign of the flow difference per unit time is inverted, based on the flow of the fluid measured by the flow measuring section, and determines whether or not the fluid instrument in use is a particular fluid instrument based on whether or not the slope falls within a predetermined range.

In accordance with this configuration, it becomes possible to accurately determine whether or not the fluid instrument which is now using the fluid is the particular fluid instrument.

According to a second aspect of the present invention, the flow meter device of the first aspect may further comprise a history storage section for storing a history of the flow measured by the flow measuring section, and the measurement data processing section may identify at least one of a time when a use of the particular fluid instrument has started and a time when the use of the particular fluid instrument has ended, based on the history of the flow stored in the history storage section, when the measurement data processing section determines that the fluid instrument in use is the particular fluid instrument.

This makes it possible to integrate the amount of the fluid used in the particular fluid instrument.

According to a third aspect of the present invention, in the flow meter device of the second aspect, the measurement data processing section may identify the time when the use of the particular fluid instrument has started, based on an event that the history of the flow corresponding to the determination has started to rise from a predetermined flow.

This makes it possible to accurately identify the time when the use of the particular fluid instrument has started.

According to a fourth aspect of the present invention, in the flow meter device of the second aspect, the measurement data processing section may identify the time when the use of the particular fluid instrument has ended, based on an event that the history of the flow corresponding to the determination has fallen to a predetermined flow and finishes changing. As defined herein, the phrase "flow falls" means that the flow changes to the predetermined flow with a certain slope.

This makes it possible to accurately identify the time when the use of the particular fluid instrument has ended.

Hereinafter, the embodiment of the present invention will be described with reference to the drawings. Note that the present invention is not limited by the present embodiment. Hereinafter, throughout the drawings, the same or corresponding components are designated by the same reference symbols and will not be described repeatedly.

**(Finding which is a basis of the present invention)**

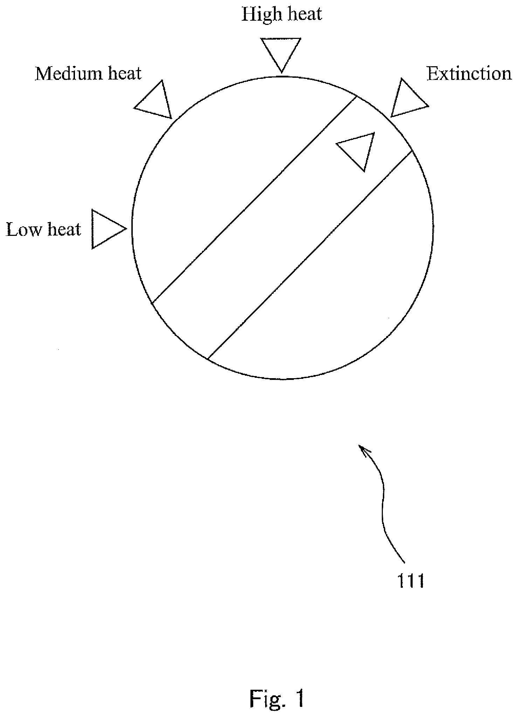

Fig. 1 is a view showing a heating power adjustment knob 111 of a stove burner having a particular characteristic.

The present invention is on the basis of the finding about the particular characteristic of the stove burner as described below.

As shown in Fig. 1, this stove burner includes the heating power adjustment knob 111 coupled to a manipulation shaft, and is configured to adjust the flow of a gas supplied to a burner by rotation of the heating power adjustment knob 111.

This stove burner is configured such that a low heat position, a medium heat position, a high heat position, and an extinction position of the heating power adjustment knob 111 are arranged in this order in a clockwise direction.

When the heating power adjustment knob 111 is rotated in a counterclockwise direction from the extinction position in this stove burner, the gas starts to be supplied to a burner of the stove burner with a maximum flow. When the heating power adjustment knob 111 is rotated in the counterclockwise direction, the flow of the gas supplied to the burner is gradually decreased. When the heating power adjustment knob 11 is rotated from the low heat position to the extinction position, the amount of the gas supplied to the burner is gradually increased, and the gas is supplied to the burner with a maximum flow just before the heating power adjustment knob 111 reaches the extinction position. When the heating power adjustment knob 111 is further rotated from this position in the clockwise direction and reaches the extinction position, the gas supplied to the burner is cut-off.

The present invention is on the basis of the finding about the stove burner having the above stated characteristic.

**(Embodiment)**

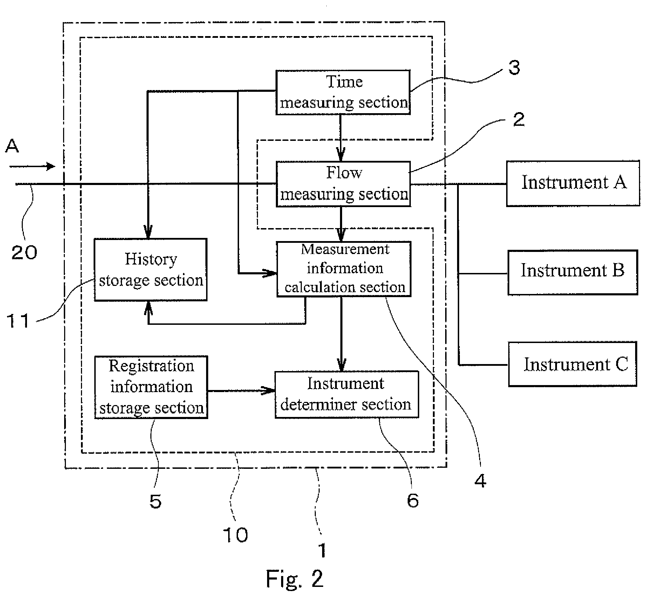

The embodiment of the present invention will be described with reference to Figs. 2 to 6.

**(Configuration)**

Fig. 2 is a block diagram showing the exemplary configuration of a flow meter device 1 according to the embodiment of the present invention.

As shown in Fig. 2, the flow meter device 1 is attached to a fluid passage 20 through which a target fluid is supplied to a fluid instrument (instrument) A, a fluid instrument B, and a fluid instrument C which are connected to the fluid passage 20 at a downstream side. The fluid instruments A to C are instruments which use the supplied target fluid and are connected in parallel with the flow meter device 1. In the present embodiment, the target fluid is a city gas but is not limited to this. The present invention is applicable to various kinds of liquids and gasses . Although a stove burner, a hot water storage unit, and a heating appliance are exemplarily described as the fluid instrument which uses the city gas, the fluid instrument is not limited to these.

The flow meter device 1 includes a flow measuring section 2, and a measurement data processing section 10.

The flow measuring section 2 measures a flow (flow rate) **Q** of the target fluid flowing in the fluid passage 20. In the present embodiment, the flow measuring section 2 is, for example, an ultrasonic measuring section, and is configured to measure the flow **Q** of the target fluid by utilizing a transit time (propagation time) of an ultrasonic wave. Note that the measuring method of the flow measuring section 2 is not limited to this. The flow measuring section 2 measures the flow **Q** of the target fluid in the fluid passage 20 at a predetermined timing based on a signal from a time measuring section 3 as will be described later.

The measurement data processing section 10 includes a control unit including a processor, such as a CPU, and a storage section including memories such as ROM and RAM. The measurement data processing section 10 may be configured as a single control unit which performs centralized control or a plurality control units which cooperate with each other to perform distributed control.

The measurement data processing section 10 includes a time measuring section 3, a measurement information calculation section 4, a registration information storage section 5, an instrument determiner section 6, and a history storage section 11. The time measuring section 3, the measurement information calculation section 4, and the instrument determiner section 6 are functional blocks implemented by the control section's operation for executing predetermined control programs stored in the storage section.

The time measuring section 3 is a processing section which outputs a timing signal at predetermined time intervals (sampling intervals). In the present embodiment, the time measuring section 3 outputs the timing signal at time intervals of 0.5s.

The measurement information calculation section 4 performs calculations based on the flow **Q** of the target fluid which is measured by the flow measuring section 2 at the predetermined time intervals and the time information from the time measuring section 3. The processing performed by the measurement information calculation section 4 includes processing for calculating a flow difference **m** per unit time, processing for determining whether or not there is a time point when a sign of the flow difference **m** per unit time is inverted, processing for calculating a slope θ of the flow difference **m** per unit time, and processing for determining whether or not the slope θ falls within a predetermined range.

The flow difference **m** per unit time is a value with a sign and is decided based the following formula:

$$\mathbf{m} = \Delta \mathbf{Q}/\Delta \mathbf{t}$$

Δ**Q**: change amount with a sign of the flow Q between the predetermined time intervals Δt

Δ**t**: time interval of the timing signal output from the time measuring section 3

The slope θ indicates a slope of a change in the flow difference **m** per unit time, which change occurs with time, and is decided based on the following formula:

$$\theta = \Delta \mathbf{m}/\Delta \mathbf{t}$$

The registration information storage section 5 contains the numeric value range of the slope θ corresponding to at least one fluid instrument. This numeric value range is a value which is found in advance by an experiment and set.

The instrument determiner section 6 identifies that a fluid instrument in use (fluid instrument which is now using the fluid) is a particular fluid instrument, when the instrument determiner section 6 determines that the slope θ calculated by the measurement information calculation section 4 falls within the numeric value range of the slope θ which is stored in the registration information storage section 5.

The history storage section 11 stores the history of the flow **Q** at a time **t** which is measured by the flow measuring section 2, and the history of the flow difference **m** per unit time at the time **t**.

In Fig. 2, arrows indicates the transmission direction of signals.

**(Exemplary operation)**

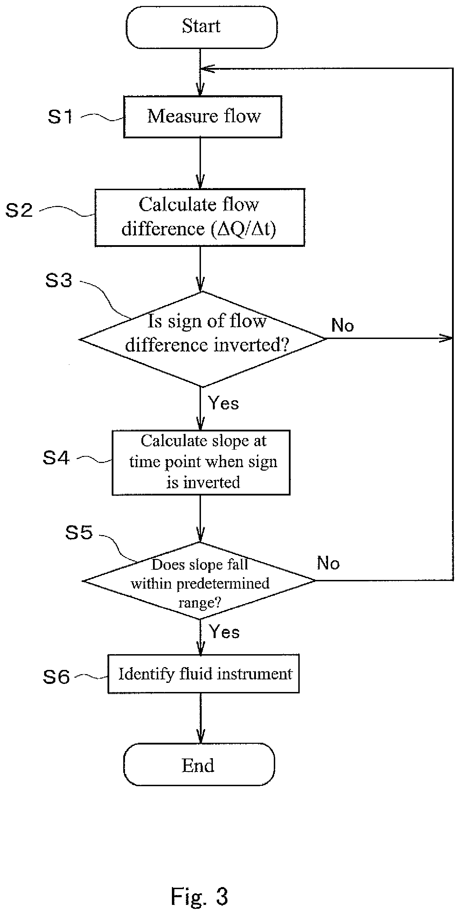

Fig. 3 is a flowchart showing the exemplary operation of the flow meter device 1.

When the target fluid flows into the flow measuring section 2 of the flow meter device 1 from the direction of an arrow A, firstly, in step S1, the flow measuring section 2 measures the flow **Q** of the target fluid flowing through the fluid passage 20 based on the timing signal from the time measuring section 3. Specifically, the flow measuring section 2 measures the flow **Q** of the target fluid in the fluid passage 20 at each time Δt defined by the time measuring section 3.

Then, in step S2, the measurement information calculation section 4 of the measurement data processing section 10 calculates the flow difference **m** per unit time between the flow **Q** obtained previously and the flow **Q** obtained in step S1. Then, the measurement data processing section 10 stores in the history storage section 11 the history of the flow **Q** at the time point **t** and the history of the flow difference **m** per unit time at the time point **t**.

Then, in step S3, the measurement information calculation section 4 of the measurement data processing section 10 determines whether or not the sign of the flow difference m per unit time which is calculated in step S2 is inverted.

When the measurement information calculation section 4 of the measurement data processing section 10 determines that the sign of the flow difference **m** per unit time is not inverted (No in step S3), the measurement data processing section 10 executes step S1 again.

On the other hand, when the measurement information calculation section 4 of the measurement data processing section 10 determines that the sign of the flow difference **m** per unit time is inverted (Yes in step S3), the measurement information calculation section 4 of the measurement data processing section 10 calculates the slope θ in step S4.

Then, in step S5, the measurement information calculation section 4 of the measurement data processing section 10 determines whether or not the slope θ falls within a predetermined numeric value range. The predetermined numeric value range of the slope θ is stored in the registration information storage section 5.

When the measurement information calculation section 4 of the measurement data processing section 10 determines that the slope θ does not fall within the predetermined numeric value range (No in step S5), the measurement data processing section 10 executes step S1 again.

On the other hand, when the measurement information calculation section 4 of the measurement data processing section 10 determines that the slope θ falls within the predetermined numeric value range (Yes in step S5), the instrument determiner section 6 of the measurement data processing section 10 determines that the fluid instrument in use is a particular fluid instrument corresponding to the predetermined numeric value range of the slope θ which is stored in the registration information storage section 5. This makes it possible to identify that the fluid instrument having a unique characteristic is in operation.

Then, the target fluid flows into each fluid instrument.

**(Example)**

Hereinafter, a specific example of the present invention will be described in detail with reference to the drawings.

The present example is an example in a case where the stove burner having the above described particular characteristic is used. The fluid instrument A is an instrument of this type. The fluid instrument B and the fluid instrument C are fluid instruments each having only one unique flow.

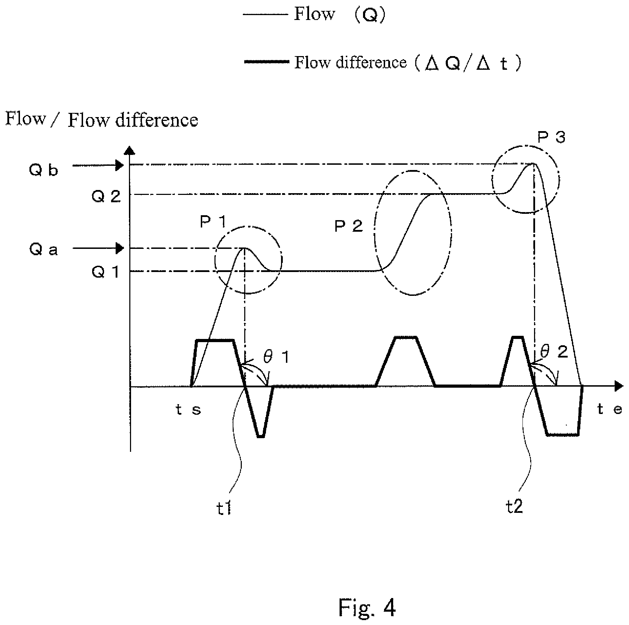

Fig. 4 is a time chart showing the flow **Q** and the flow difference **m** in a case where the stove burner (fluid instrument A) having the above described particular characteristic is used. In the time chart, a thin line indicates the change in the flow **Q** which occurs with time, and a bold line indicates the flow difference **m** per unit time.

Firstly, the operation performed when a user performs a firing manipulation (manipulation for starting the use of the fluid instrument) will be described.

As shown in Fig. 4, when the user rotates the heating power adjustment knob 111 in the counterclockwise direction from the extinction position toward the medium heat position which is a firing position to fire the stove burner, the gas starts to be supplied to the burner of the stove burner with a maximum flow. Therefore, the flow **Q** of the gas in the fluid passage 20 which is measured by the flow measuring section 2 is increased up to **Qa** as indicated by the thin line within a range of **P1** of Fig. 4. Thereafter, when the heating power adjustment knob 111 reaches the medium heat position, the flow **Q** of the gas which is measured by the flow measuring section 2 is decreased from **Qa** to a set flow **Q1** corresponding to the medium heat position. As described above, the flow of the gas is increased up to **Qa** and thereafter becomes **Q1** which is less than **Qa.**

Therefore, the change in the flow difference **m** per unit time which is calculated by the measurement information calculation section 4 in step S2, which change occurs with time, is, as indicated by the bold line of Fig. 4, such that the flow difference **m** per unit time becomes 0 at a time point **t1** when the gas is supplied to the burner of the stove burner with a maximum flow, and the sign of the flow difference **m** per unit time is inverted between a time period that is before the time point **t1** and a time period that is after the time point **t1.** Therefore, the measurement data processing section 10 performs the determination as "Yes" in step S3, calculates a slope θ**1** at **t1** (step S4) and determines whether or not the slope θ**1** falls within the predetermined numeric value range (step S5). When the measurement data processing section 10 determines that the slope θ**1** falls within the predetermined numeric value range (Yes in step S5), it determines that the fluid instrument in use is the particular fluid instrument A corresponding to the predetermined numeric value range of the slope θ which is stored in the registration information storage section 5.

As described above, the fluid instrument B and the fluid instrument C are fluid instruments each having only one unique flow. In a case where the fluid instrument B or the fluid instrument C is used, the flow difference **m** per unit time at the time of firing is changed from 0 to a positive value, and is changed from the positive value to 0 when the gas flow reaches the unique flow of the fluid instrument. Thus, differently from the fluid instrument A, the flow difference **m** per unit time is not changed continuously from a positive value to a negative value, in the case of the fluid instrument B and the fluid instrument C. Therefore, the measurement data processing section 10 can determine that the fluid instrument in use is the fluid instrument A, rather than the fluid instrument B and the fluid instrument C.

By the way, in a heating power adjusting manipulation, if the heating power adjustment knob 111 is slowly rotated in a specified direction and is slowly rotated in an opposite direction immediately thereafter, the flow difference **m** per unit time is changed continuously from a positive value to a negative value when the sign of the flow difference **m** per unit time is inverted. However, in this heating power adjusting manipulation, since a change in the flow of the gas which is measured by the flow measuring section 2 is less than that in a firing manipulation performed typically for a relatively short moment, the slope θ takes a value which is smaller than that in the firing manipulation. Therefore, the measurement information calculation section 4 of the measurement data processing section 10 determines that the slope θ does not fall within the predetermined numeric value range (step S5), and the instrument determiner section 6 does not identify the fluid instrument in use. By defining the value of the slope θ within the predetermined range, it becomes possible to accurately identify the fluid instrument in use.

Next, the operation performed in a case where the user performs the heating power adjusting manipulation will be described.

When the user rotates the heating power adjustment knob 111 in the clockwise direction from the medium heat position toward the high heat position to increase the heating power of the stove burner, from the medium heat to a heating power to be used, the flow **Q** of the gas supplied to the burner of the stove burner is increased. Specifically, the flow **Q** of the gas in the fluid passage 20 which is measured by the flow measuring section 2 is increased from **Q1** to a set flow **Q2** corresponding to a use heating power position of the heating power adjustment knob 111, as indicated by a range **P2** of Fig. 4.

Therefore, the flow difference **m** per unit time which is calculated by the measurement information calculation section 4 in step S2 is changed from 0 to a specified positive value when the heating power adjustment knob 111 is being rotated from the medium heat position toward the high heat position as indicated by the bold line of Fig. 4. When the heating power adjustment knob 111 is stopped at the use heating power position, the flow difference m per unit time is changed from the positive value to 0.

During the heating power adjusting manipulation performed by the user, the sign of the flow difference **m** per unit time is not inverted. Therefore, the measurement data processing section 10 performs determination as "No" in step S3, and performs step S1 again.

In brief, the measurement data processing section 10 does not perform determination as to the fluid instrument in use, in the heating power adjusting manipulation.

Next, the operation performed in a case where the user performs an extinction manipulation (manipulation for ending the use of fluid instrument) will be described.

When the user rotates the heating power adjustment knob 111 in the clockwise direction from the use heating power position to the extinction position to extinguish the fire of the stove burner, the gas is supplied to the burner of the stove burner with a maximum flow for a moment. Therefore, the flow **Q** of the gas in the fluid passage 20 which is measured by the flow measuring section 2 is increased up to **Qb** as indicated by the thin line within a range **P3** of Fig. 4. Thereafter, at a time point **te,** when the heating power adjustment knob 111 reaches the extinction position, the gas supplied to the burner of the stove burner is cut-off, and therefore, the flow **Q** of the gas which is measured by the flow measuring section 2 becomes 0. Thus, the flow of the gas which is measured by the flow measuring section 2 is increased up to **Qb** and then is decreased to 0 immediately thereafter.

Therefore, the change in the flow difference **m** per unit time calculated by the measurement information calculation section 4 in step S2, which change occurs with time is, as indicated by the bold line of Fig. 4 such that the flow difference **m** per unit time becomes 0 at a time point **t2** when the gas is supplied to the burner with a maximum flow, and the sign of the flow difference **m** per unit time is inverted between a time period before the time point **t2** and a time period after the time **t2**. Therefore, the measurement data processing section 10 performs determination as "Yes" in step S3, calculates a slope θ**2** at t2 (step S4), and determines whether or not the slope θ**2** falls within the predetermined numeric value range (step S5). Then, the measurement data processing section 10 determines that the slope θ**2** falls within the predetermined numeric value range (step S5) and identifies that the fluid instrument in use is the particular fluid instrument A corresponding to the predetermined numeric value range of the slope θ which is stored in the registration information storage section 5.

As described above, in the flow meter device of the present invention, the measurement data processing section 10 calculates the slope θ of the change in the flow difference per unit time, which change occurs with time, at the time point when the sign of the flow difference **m** per unit time is inverted, and determines whether the fluid instrument in use is a particular fluid instrument based on whether or not the slope θ falls within the predetermined range. This makes it possible to accurately determine that the particular fluid instrument is now in use (in operation), among the fluid instruments connected to the flow meter device 1. Therefore, it becomes possible to detect the use state of a manual manipulation fluid instrument which cannot be easily determined as compared to a micro control device.

**\<Modified example\>**

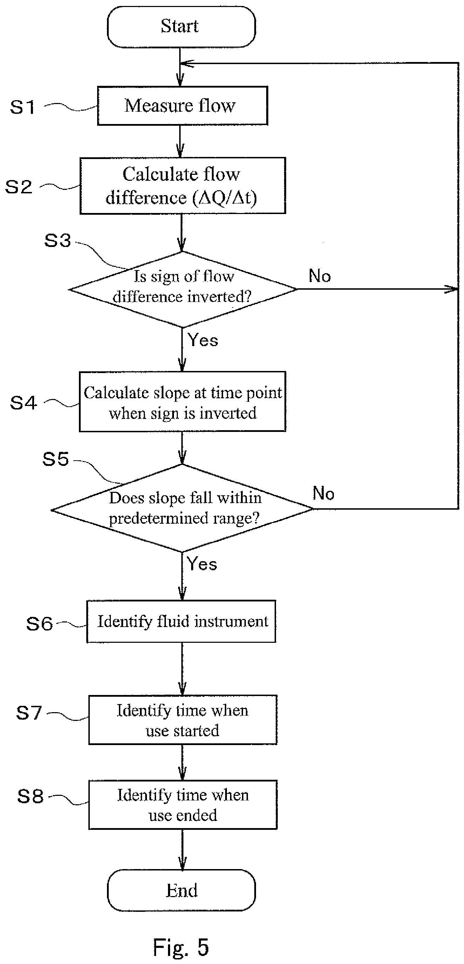

In the above described embodiment, as shown in Fig. 5, the measurement data processing section 10 may identify the time when the use of the particular fluid instrument has started, based on the history of the flow **Q** stored in the history storage section 11, in a step subsequent to step S6. Specifically, when the measurement data processing section 10 determines that the particular fluid instrument A is now in use due to, for example, the user's manipulation for starting the use of the fluid instrument, it may identify a time point **ts** when the use of the particular fluid instrument has started, based on an event that the history of the flow **Q** corresponding to this determination has started to rise from a predetermined flow (e.g. 0). This makes it possible to integrate the usage amount of the target fluid from when the use of the target fluid in the particular fluid instrument has started.

In the above described embodiments, as shown in Fig. 5, the measurement data processing section 10 may identify the time when the use of the particular fluid instrument has ended, based on the history of the flow **Q** stored in the history storage section 11, in a step subsequent to step S6. Specifically, when the measurement data processing section 10 determines that the particular fluid instrument A is now in use due to, for example, the user's manipulation for extinguishing the fire, it may identify a time point **te** when the use of the particular fluid instrument has ended, based on an event that the history of the flow **Q** corresponding to this determination finishes changing and converges at the predetermined flow (e.g. 0). This makes it possible to integrate the usage amount of the target fluid until when the use of the target fluid in the particular fluid instrument has ended.

In the present embodiment, the flow measuring section 2 measures the flow of target fluid in the fluid passage 20 at measurement timings of 0.5 second intervals, based on the timing signal received from the time measuring section 3. However, if an instantaneous change in the flow within, for example, the range A or C of Fig. 4, cannot be captured clearly, the unit time of the measurement timing may be shorter than that in the above case.

Although in the present embodiment, the operation performed to identify the fluid instrument in use in the case where one fluid instrument is used simultaneously has been described, the present invention is applicable to determination as to the fluid instrument in use in a case where a plurality of fluid instruments are concurrently used simultaneously. In this case, the flows of the target fluid corresponding to the respective fluid instruments may be calculated based on well-known algorithms and the fluid instrument in use may be identified based on a result of the calculation.

**Industrial Applicability**

As described above, a flow meter device of the present invention is able to reliably determine whether or not a fluid instrument in use is a particular fluid instrument, by determining whether or not a slope of a change in a sign of a flow difference per unit time falls within a predetermined range, and therefore is widely applicable to a technique for determining instruments having such a characteristic.

**Reference Signs List**

1   flow meter device
2   flow measuring section
3   time measuring section
10   measurement data processing section
11   history storage section
20   fluid passage

**Claims**

1. A method of using a flow meter device (1) comprising:

   a flow measuring section (2) for measuring a flow (Q) of a fluid in a fluid passage (20) through which the fluid is supplied to a fluid instrument (A, B, C) in use;
   **characterized by**
   a measurement data processing section (10) which calculates a slope ($\theta 1$, $\theta 2$) of a change in a flow difference per unit time ($\Delta Q/\Delta t$) which change occurs with time, at a time point (t1, t2) when a sign of the flow difference per unit time $\Delta Q/\Delta t$) is inverted, based on the flow (Q) of the fluid measured by the flow measuring section (2), and determines whether or not the fluid instrument (A, B, C) in use is a particular fluid instrument based on whether or not the slope ($\theta 1$, $\theta 2$) falls within a predetermined range, wherein the particular fluid instrument in use comprises a heating power adjustment knob (111) and wherein the sign of the flow difference per unit time ($\Delta Q/\Delta t$) is inverted when a manipulation of the particular fluid instrument in use is changed between a firing manipulation and an extinction manipulation by means of the heating power adjustment knob (111).

2. The method of using the flow meter device (1) according to claim 1, further comprising:

   a history storage section (11) for storing a history of the flow measured by the flow measuring section (2);
   wherein the measurement data processing section (10) identifies at least one of a time (ts) when a use of the particular fluid instrument has started and a time (te) when the use of the particular fluid instrument has ended, based on the history of the flow stored in the history storage section (11), when the measurement data processing section (10) determines that the fluid instrument in use is the particular fluid instrument.

3. The method of using the flow meter device (1) according to claim 2,
wherein the measurement data processing section (10) identifies the time (ts) when the use of the particular fluid instrument has started, based on an event that the history of the flow corresponding to the determination has started to rise from a predetermined flow.

4. The method of using the flow meter device (1) according to claim 2,
wherein the measurement data processing section (10) identifies the time (te) when the use of the particular fluid instrument has ended, based on an event that the history of the flow corresponding to the determination has fallen to a predetermined flow and finishes changing.

**Patentansprüche**

1. Verfahren zum Verwenden eines Durchflussmessgeräts (1) enthaltend:

einen Flussmessabschnitt (2) zum Messen eines Flusses (Q) eines Fluids in einer Fluidpassage (20) durch die das Fluid einem ersten Fluidinstrument (A, B, C) in Verwendung zugeführt wird; **gekennzeichnet durch**
einen Messdatenverarbeitungsabschnitt (10), der eine Steigung (θ1/θ2) einer Änderung in einer Flussdifferenz pro Zeiteinheit (ΔQ/Δt), der mit der Zeit auftritt, zu einem Zeitpunkt (t1, t2), zu dem ein Vorzeichen der Flussdifferenz pro Zeiteinheit (ΔQ/Δt) invertiert ist, basierend auf dem Fluss (Q) des Fluids, der von dem Flussmessabschnitt (2) gemessen wird, berechnet und basierend darauf, ob die Steigung (θ1/θ2) in einen vorbestimmten Bereich fällt, ermittelt, ob das in Verwendung befindliche Fluidinstrument ein bestimmtes Fluidinstrument ist oder nicht, wobei das bestimmte in Verwendung befindliche Fluidinstrument einen Heizenergieeinstellknopf (111) enthält, und wobei das Vorzeichen des Flussdifferenz pro Zeiteinheit (ΔQ/Δt) invertiert wird, wenn eine Manipulation des in Verwendung befindlichen bestimmten Fluidinstruments zwischen einer Befeuerungsmanipulation und einer Löschmanipulation mittels des Heizenergieeinstellknopfes (111) geändert wird.

2. Verfahren zum Verwenden des Flussmessgeräts (1) gemäß Anspruch 1, ferner enthaltend:

einen Historienspeicherabschnitt (11) zum Speichern einer Historie des von dem Flussmessabschnitts (2) gemessenen Flusses;
wobei der Messdatenverarbeitungsabschnitt (10) wenigstens eines von einer Zeit (ts) zu der eine Verwendung des bestimmten Fluidinstruments begann, und einer Zeit (te), zu der die Verwendung des bestimmten Fluidinstruments beendet wurde, basierend auf der Historie des in dem Historienspeicherabschnitt (11) gespeicherten Historie des Flusses identifiziert, wenn der Messdatenverarbeitungsabschnitt (10) ermittelt, dass das in Verwendung befindliche Fluidinstrument das bestimmte Fluidinstrument ist.

3. Verfahren zum Verwenden des Flussmessgeräts (1) gemäß Anspruch 2, bei dem der Messdatenverarbeitungsabschnitt (10) die Zeit (ts), zu der die Verwendung des bestimmten Fluidinstruments begann, basierend auf einem Ereignis, das die Historie des der Ermittlung entsprechenden Flusses begonnen hat, von einem vorbestimmten Fluss anzusteigen.

4. Verfahren zum Verwenden des Flussmessgeräts (1) gemäß Anspruch 2, bei dem der Messdatenverarbeitungsabschnitt (10) die Zeit (te), zu der die Verwendung des bestimmten Fluidinstruments beendet wurde, basierend auf einem Ereignis, das die Historie des der Ermittlung entsprechenden Flusses auf einem vorbestimmten Fluss gefallen ist und die Veränderung beendet, identifiziert.

**Revendications**

1. Procédé d'utilisation d'un dispositif débitmètre (1), comprenant :

une section de mesure de débit (2) pour mesurer un débit (Q) d'un fluide dans un passage de fluide (20) à travers lequel le fluide est fourni à un instrument fluidique (A, B, C) durant l'utilisation ; **caractérisé par**
une section de traitement de données de mesure (10) qui calcule une pente (θ1, θ2) d'un changement d'une différence de débit par unité de temps (ΔQ/Δt) lequel changement se produit au fil du temps, à un instant (t1, t2) lorsqu'un signe de la différence de débit par unité de temps (ΔQ/Δt) est inversé, sur la base du débit (Q) du fluide mesuré par la section de mesure de débit (2), et détermine le fait que l'instrument fluidique (A, B, C), durant l'utilisation, est ou non un instrument fluidique particulier sur la base du fait que la pente (θ1, θ2) est ou non au sein d'une plage prédéterminée, dans lequel l'instrument fluidique particulier, durant l'utilisation, comprend un bouton d'ajustement de puissance de chauffage (111) et dans lequel le signe de la différence de débit par unité de temps ($\Delta Q/\Delta t$) est inversé lorsqu'une manipulation de l'instrument fluidique particulier, durant l'utilisation, est changé entre une manipulation d'allumage et une manipulation d'extinction au moyen du bouton d'ajustement de puissance de chauffage (111).

2. Procédé d'utilisation du dispositif débitmètre (1) selon la revendication 1, comprenant en outre :

une section de stockage d'historique (11) pour stocker un historique du débit mesuré par la section de mesure de débit (2) ;
dans lequel la section de traitement de données de mesure (10) identifie au moins un d'un temps (ts) auquel une utilisation de l'instrument fluidique particulier a commencé et d'un temps (te) auquel l'utilisation de l'instrument fluidique particulier s'est terminée, sur la base de l'historique du débit stocké dans la section de stockage d'historique (11), lorsque la section de traitement de données de mesure (10) détermine que l'instrument fluidique, durant l'utilisation, est l'instrument fluidique particulier.

3. Procédé d'utilisation du dispositif débitmètre (1) selon la revendication 2, dans lequel la section de traitement de données de mesure (10) identifie le temps (ts) auquel l'utilisation de l'instrument fluidique particulier a commencé, sur la base d'un événement où l'historique du débit correspondant à la détermination a commencé d'augmenter à partir d'un débit prédéterminé.

4. Procédé d'utilisation du dispositif débitmètre (1) selon la revendication 2, dans lequel la section de traitement de données de mesure (10) identifie le temps (te) auquel l'utilisation de l'instrument fluidique particulier s'est terminée, sur la base d'un événement où l'historique du débit correspondant à la détermination a diminué jusqu'à un débit prédéterminé et finit de changer.

Fig. 1

Fig. 2

EP 2 840 365 B1

Fig. 3

Fig. 4

Fig. 5

**EP 2 840 365 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006200802 A
- EP 1881304 A1
- JP 2011191122 A